# EUROPEAN PATENT APPLICATION

(11) **EP 1 967 845 A2**
(43) Date of publication of application: **10.09.2008**
(21) Application number: 08004078.5
(22) Date of filing: 05.03.2008
(51) Int. Cl.: G01N 21/64, G06T 7/00

(54) **Fluorescence observation apparatus**

(30) Priority: 09.03.2007 JP 2007060483
(71) Applicant: Olympus Corporation, Tokyo 151-0072 (JP)
(72) Inventor: Nakajima, Chika, Chofu-shi, Tokyo 182-0007 (JP); Nakato, Yuki, Kokubunji-shi Tokyo 185-0036 (JP)
(74) Representative: von Hellfeld, Axel

(57) **Abstract**

Provided is a fluorescence observation apparatus that enables efficient data acquisition by simplifying the positioning process of a small laboratory animal and that enables easy comparative examination of many images. The fluorescence observation apparatus includes a display unit configured to display a plurality of combined images arrayed in at least one direction, each of the combined images being generated by combining a bright-field image and a fluorescence image of a small laboratory animal; an outline-extracting unit configured to extract an outline of the small laboratory animal in the bright-field image included in each combined image; and an image-position adjusting unit configured to adjust the display positions of the combined images such that the outlines of the small laboratory animal extracted by the outline-extracting unit match each other in a direction orthogonal to the arrayed direction.

## Description

### BACKGROUND OF THE INVENTION

### 1. FIELD OF THE INVENTION

The present invention relates to a fluorescence observation apparatus.

This application is based on Japanese Patent Application No. 2007-060483, the content of which is incorporated herein by reference.

### 2. DESCRIPTION OF RELATED ART

With fluorescence observation apparatuses according to the related art, a small laboratory animal, such as a mouse, is illuminated with excitation light and fluorescence emitted at an affected site, such as cancer tissue, and is observed (for example, refer to US Patent No. 5,650,135). Compared with observation of luminescence, observation of fluorescence is advantageous in that the observed image is clear and easy to examine since relatively high-intensity fluorescence is used for the observation.

A drug is applied to an affected site of a small laboratory animal. Then, drug discovery screening is carried out to examine changes in the affected site of the same small laboratory animal over time or to confirm the effect of the drug on a plurality of small laboratory animals. To increase the accuracy of the drug discovery screening, the same small laboratory animal must be examined several times at predetermined time intervals, or a plurality of small laboratory animals must be examined at once.

However, to examine a small laboratory animal at predetermined time intervals, the process of placing the small laboratory animal on an examination apparatus has to be repeated, and each time the process is repeated, the small laboratory animal has be positioned. In other words, there is a disadvantage in that data cannot be obtained effectively if the positioning process takes too much time. Furthermore, if the small laboratory animal is not positioned accurately, the position of the affected site in the acquired fluorescence images change. Consequently, there is another disadvantage in that it becomes difficult to confirm a change in the affected site by carrying out comparative examination in which the fluorescence images are arrayed on a display screen or comparative examination in which the fluorescence images are switched on the display.

### BRIEF SUMMARY OF THE INVENTION

The present invention has been conceived in light of the problems described above. Accordingly, it is an object of the present invention to provide a fluorescence observation apparatus that enables efficient data acquisition by simplifying the positioning process of a small laboratory animal and that enables easy comparative examination of many images.

To achieve the above-described objects, the present invention provides the following solutions.

A first aspect of the present invention provides a fluorescence observation apparatus including a display unit configured to display a plurality of combined images arrayed in at least one direction, each of the combined images being generated by combining a bright-field image and a fluorescence image of a small laboratory animal; an outline-extracting unit configured to extract an outline of the small laboratory animal in the bright-field image included in each combined image; and an image-position adjusting unit configured to adjust the display positions of the combined images such that the outlines of the small laboratory animal extracted by the outline-extracting unit match each other in a direction orthogonal to the arrayed direction.

According to the first aspect of the present invention, the outline of the small laboratory animal in the bright-field image included in the combined image is extracted by operating the outline-extracting unit, and by operating the image-position adjusting unit, the display positions of the combined images are adjusted such that the outlines of the small laboratory animal in the combined images extracted by the outline-extracting unit match each other in a direction orthogonal to the arrayed direction. In this state, the combined images are arrayed and displayed in at least one direction by operating the display unit.

In this way, when the bright-field images and the fluorescence images of the small laboratory animal are acquired at predetermined time intervals, even when the small laboratory animal is roughly positioned, combined images in which the outlines of small laboratory animal are oriented in a direction orthogonal to the arrayed direction of the combined images can be displayed. Moreover, comparative examination of these combined images can be easily carried out.

In other words, the amount of time required for positioning the small laboratory animal can be reduced, and drug discovery screening can be carried out efficiently to examine the changes over time in the affected site of the same small laboratory animal or to confirm the effect of a drug on a plurality of small laboratory animals.

According to the first aspect, the image-position adjusting unit may calculate the centers of gravity of the outlines of the small laboratory animal and adjust the display positions of the combined images such that the centers of gravity in the combined images match each other in the direction orthogonal to the arrayed direction.

In this way, even if the outlines of the small laboratory animal move slightly, the display positions can be matched so that the outlines to not move greatly in the direction orthogonal to the arrayed direction.

According to the first aspect, the image-position adjusting unit may calculate the longitudinal direction and the orientation of the outlines of the small laboratory animal and adjust the display angles of the combined images such that the longitudinal directions and the orientations of the combined images match each other.

In this way, the combined images arrayed in at least one direction are displayed on the display unit while the longitudinal direction and the orientation of the outlines of the small laboratory animal match the longitudinal direction and the orientation of other combined images in the direction orthogonal to the arrayed direction. By matching the longitudinal directions of the outlines, the outlines of the small laboratory animal are arrayed substantially parallel to each other. Moreover, by matching the longitudinal directions of the outlines, the orientations of the head area of the outlines of the small laboratory animal can be matched.

A second aspect of the present invention provides a fluorescence observation apparatus including a display unit configured to display and switch between a plurality of combined images that are each generated by combining a bright-field image and a fluorescence image of a small laboratory animal; an outline-extracting unit configured to extract an outline of the small laboratory animal in the bright-field image included in each combined image; and an image-position adjusting unit configured to adjust the display positions of the combined images such that the outlines of the small laboratory animal extracted by the outline-extracting unit match each other.

According to the second aspect of the present invention, the outline of the small laboratory animal in the bright-field image included in the combined image is extracted by operating the outline-extracting unit, and by operating the image-position adjusting unit, the display positions of the combined images are adjusted such that the outlines of the small laboratory animal in the combined images extracted by the outline-extracting unit match each other in a direction orthogonal to the arrayed direction. In this state, the combined images are switched and displayed by operating the display unit.

In this way, comparative examination of the changes or differences in the affected site, in particular, can be carried out because the outlines of the small laboratory animal match when the combined images are switched sequentially.

According to the second aspect, the image-position adjusting unit may calculate the centers of gravity of the outlines of the small laboratory animal and adjust the display positions of the combined images such that the centers of gravity in the combined images match each other.

In this way, even when the outlines of the small laboratory animal change to a certain degree, the outlines can be matched and displayed so that their display positions do not change greatly. Therefore, the correspondence and changes between the affected sites in the combined images can be checked quickly.

According to the second aspect, the image-position adjusting unit may calculate the longitudinal direction and the orientation of the outlines of the small laboratory animal and adjust the display angles of the combined images such that the longitudinal directions and the orientations of the combined images match each other.

In this way, the combined images, which are switched sequentially, are displayed by the display unit while matching the longitudinal direction and the orientation of the outlines of the small laboratory animal. In this way, comparative examination can be carried out even more easily since the outlines of the small laboratory animal in the combined images are displayed with the same rotational orientation.

According to the second aspect, the fluorescence observation apparatus may further include an observation optical system configured to acquire the bright-field images and the fluorescence images of the small laboratory animal; an image-combining unit configured to combine a bright-field image and a fluorescence image acquired by fixing the observation optical system with respect to the small laboratory animal; and an image-storing unit configured to store the combined image acquired by the image-combining unit, in which a plurality of combined images stored in the image-storing unit may displayed on the display unit.

According to the second aspect, the fluorescence observation apparatus may further include an image analyzing unit configured to analyze the combined images stored in the image-storing unit.

According to the second aspect, the fluorescence observation apparatus may further include a case configured to accommodate the observation optical system and block light, in which the case may have an openable and closable door and a sensor configured to detect the opening and closing of the door, and in which, when the sensor detects that the door has been closed, the observation optical system may acquire a bright-field image and a fluorescence image.

In this way, by opening the door of the case, positioning the small laboratory animal in the observation optical system, and then closing the door, light is blocked from entering the case. When the closing of the door is detected by the sensor, a bright-field image and a fluorescence image are acquired by the observation optical system. Since light is blocked from entering the case when the door is closed, a bright-field image and a fluorescence image can be acquired without being affected by outside light, and leakage of the excitation light is prevented.

The present invention is advantageous in that data can be acquired efficiently by simplifying the positioning process of a small laboratory animal and that a comparative examination of many images can be carried out easily.

### BRIEF DESCRIPTION OF THE SEVERAL VIEWS OF THE DRAWINGS

Fig. 1 illustrates the overall structure of a fluorescence observation apparatus according to an embodiment of the present invention.

Fig. 2A illustrates an example bright-field image acquired by the fluorescence observation apparatus shown in Fig. 1.

Fig. 2B illustrates an example fluorescence image acquired by the fluorescence observation apparatus shown in Fig. 1.

Fig. 2C illustrates an example combined image acquired by the fluorescence observation apparatus shown in Fig. 1.

Fig. 3 illustrates the center of gravity and the orientation of a mouse calculated from the combined image acquired by the fluorescence observation apparatus shown in Fig. 1.

Fig. 4 illustrates an example display of a plurality of combined images acquired by the fluorescence observation apparatus shown in Fig. 1.

Fig. 5 illustrates an example display of the plurality of combined images shown in Fig. 4, with the image region outside the outline of the mouse removed.

Fig. 6 is a comparative example of a plurality of unprocessed combined images acquired by the fluorescence observation apparatus shown in Fig. 1.

Fig. 7 illustrates a modification of displaying a plurality of combined images acquired by the fluorescence observation apparatus shown in Fig. 1.

### DETAILED DESCRIPTION OF THE INVENTION

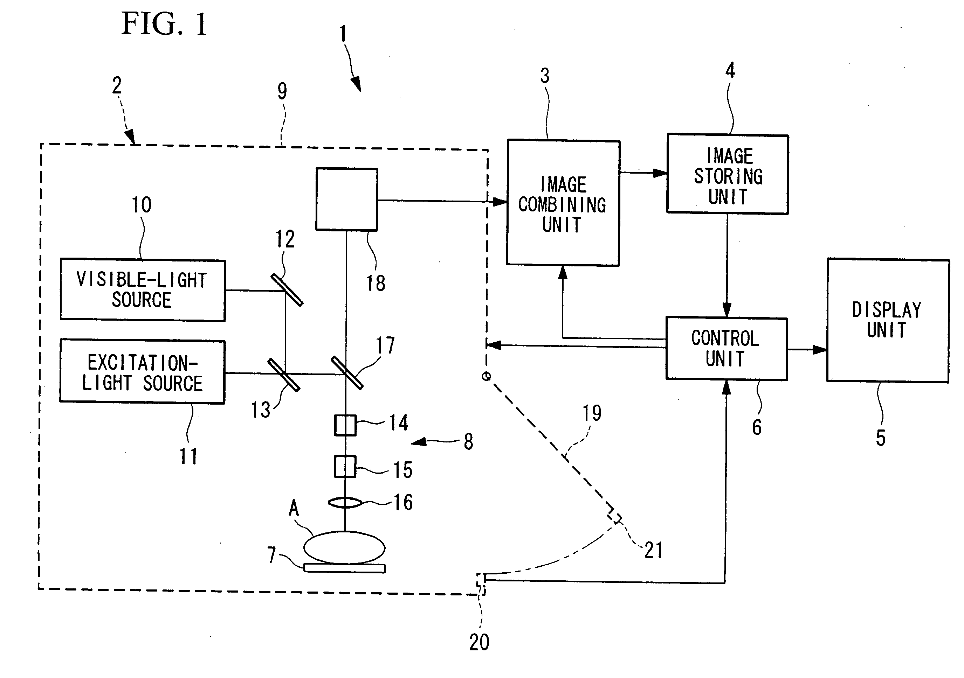

A fluorescence observation apparatus 1 according to an embodiment of the present invention will be described below with reference to Figs. 1 to 7.

As shown in Fig. 1, the fluorescence observation apparatus 1 according to this embodiment includes a main body 2 of the fluorescence observation apparatus 1, an image combining unit 3, an image storing unit 4, a display unit 5, and a control unit (outline-extracting unit, image-position adjusting unit, and image analyzing unit) 6 that controls these units.

The main body 2 includes a stage 7 for placing a small laboratory animal, such as a mouse A, an observation optical system 8, and a case 9 that accommodates the observation optical system 8 and blocks light.

The observation optical system 8 includes a visible-light source 10 that emits visible light for bright-field examination, an excitation light source 11 that emits excitation light for fluorescence observation, a mirror 12 and a dichroic mirror 13 that combine the visible light and the excitation light into the same optical path, a focal-point adjustment optical system 14 that adjusts the focal points of the visible light and the excitation light, a zooming optical system 15 that adjusts the examination magnification, an objective lens 16 that illuminates the mouse A on the stage 7 with visible light and excitation light and that collects the reflected visible light and fluorescence from the mouse A, a dichroic mirror 17 that separates the reflected light and fluorescence collected by the objective lens 16 from the excitation light, and an image-acquisition unit 18 that acquires the separated reflected light and fluorescence.

On the case 9, a door 19 that can be opened and closed is provided near the stage 7. A sensor 20 that detects that the door 19 is closed is provided on the door 19. Reference numeral 21 represents a detection member that is detected by the sensor 20.

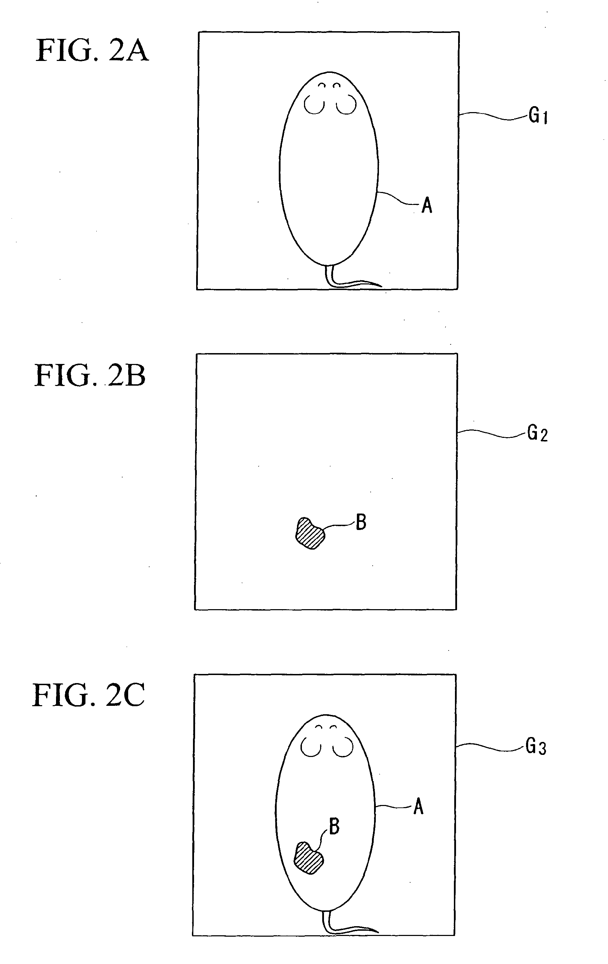

The image combining unit 3 generates a combined image G₃, shown in Fig. 2C, by combining a bright-field image (reflected-light image) G₁, shown in Fig. 2A, and a fluorescence image Gz of an affected site B, shown in Fig. 2B. The bright-field image G₁ is an image including an outline of the mouse A and is acquired by illuminating the mouse A with the visible light from the visible-light source 10 and acquiring the reflected light from the surface of the mouse A at the image-acquisition unit 18. The fluorescence image G₂ is acquired by illuminating the mouse A with the excitation light from the excitation light source 11 and acquiring the fluorescence emitted at the mouse A.

The image storing unit 4 stores the generated combined images G₃ in sequence.

The control unit 6 drives the main body 2 when it receives a closed signal for the door 19 from the sensor 20 of the case 9 and generates a combined image G₃ by operating the image combining unit 3. After a plurality of combined images G₃ is stored in the image storing unit 4, the control unit 6 reads these combined images G₃ and carries out the following image processing.

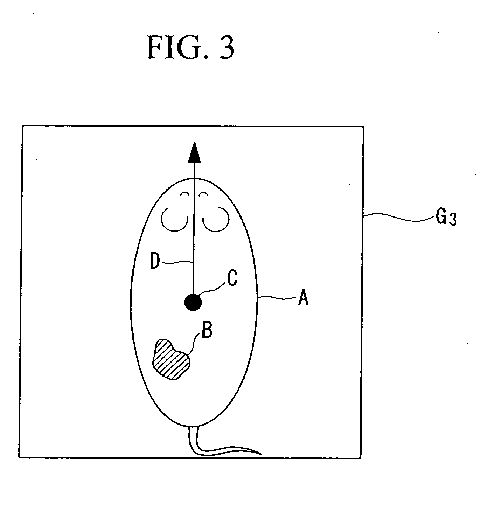

As shown in Fig. 3, each combined image G₃ is processed to extract the outline of the mouse A in the bright-field image G₁ included in the combined image G₃. Extraction of the outline can be easily carried out by any method according to the related art, such as digitization or pixel displacement.

Subsequently, the center of gravity C of the extracted outline is determined. The center of gravity C can be easily calculated by, for example, calculating the area in the extracted outline and determining the intersecting point of two lines each of which divides the area in half.

Subsequently, as shown in Fig. 3, the longitudinal direction and the orientation (arrow D) of the outline of the mouse A in each combined image G₃ is determined. The longitudinal direction can be determined easily by connecting the pixels farthest apart on the outline. The orientation of the mouse A can be easily determined by extracting characteristic parts, such as eyes, whiskers, nose, and tail, which differentiate the head and the tail area.

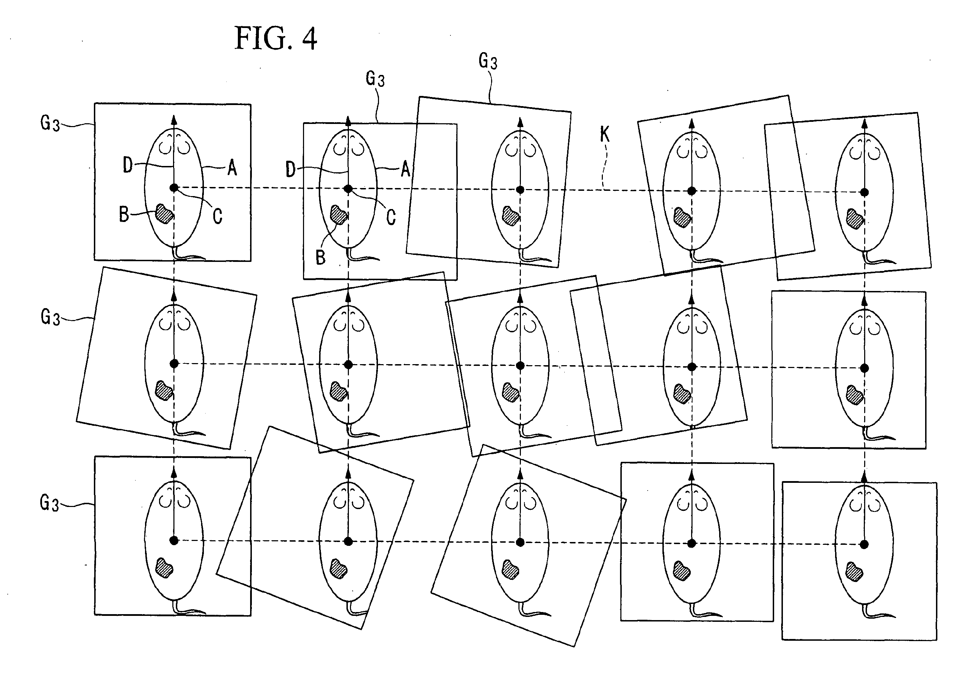

Then, the control unit 6 displays the combined images G₃ in an array shown in Fig. 4. Fig. 4 illustrates an example array of combined images G₃ displayed on the display unit 5. In this embodiment, the control unit 6 displays fifteen combined images G₃ on the screen of the display unit 5 in an array of five columns and three rows.

In this case according to this embodiment, the combined images G₃ are arrayed by translating and rotating the combined images G₃ such that the centers of gravity of the combined images G₃ match the points provided at equal intervals along longitudinal and lateral lines K, shown in Fig. 4, and such that the arrows D in the combined images G₃ point in the same direction.

The operation of the fluorescence observation apparatus 1 according to this embodiment, configured as described above, will be described below.

To carry out fluorescence observation of a mouse A using the fluorescence observation apparatus 1 according to this embodiment, the operator secures an anesthetized mouse A, into which a fluorescent agent has been dosed, on the stage 7 inside the case 9 of the main body 2 and closes the door 19 of the case 9.

Since the sensor 20 is provided on the door 19 of the case 9, a signal indicating that the door 19 has been closed is sent to the control unit 6 from the sensor 20.

The control unit 6 sends an operation signal to the main body 2 and the image combining unit 3 and acquires a bright-field image G₁ and a fluorescence image G₂ from the main body 2.

Specifically, in response to the operation signal from the control unit 6, visible light is emitted from the visible-light source 10 of the main body 2 and is incident on the mouse A on the stage 7. The light reflected at the surface of the mouse A is collected by the objective lens 16 and is acquired by the image-acquisition unit 18. A bright-field image G₁, including the outline of the mouse A, that is acquired by the image-acquisition unit 18 is sent to and temporarily stored in the image combining unit 3.

Then, excitation light is emitted from the excitation light source 11 and is incident on the mouse A on the stage 7. Fluorescence is emitted by the excited fluorescent agent accumulated at a specific affected site B, such as cancer, of the mouse A. The emitted fluorescence is focused by the objective lens 16 and is acquired by the image-acquisition unit 18. In the fluorescence image G₂ acquired by the image-acquisition unit 18, the shape of the affected site B appears high intensity. This fluorescence image G₂ is sent to the image combining unit 3 and is combined with the stored bright-field image G₁ so as to generate a combined image G₃. The generated combined image G₃ is stored in the image storing unit 4.

To carry out fluorescence observation of the same mouse A over time, the door 19 of the case 9 is opened and the mouse A is removed. After awakening, the mouse A returns to normal activity and is then anesthetized again to repeat the above-described process. In this way, multiple combined images G₃ can be stored in the image storing unit 4. To carry out fluorescence observation of different mice A, the door 19 of the case 9 is opened and the mouse A is removed. Then, a different anesthetized mouse A is placed on the stage 7 and the above-described process is repeated.

After, for example, fifteen combined images G₃ are stored in the image storing unit 4, the control unit 6 processes these combined images G₃ to calculate the centers of gravity C and the orientations D of the mouse. Then, the combined images G₃ are translated and rotated such that the centers of gravity C are arrayed at equal intervals and such that the orientations D of the mouse match, as shown in Fig. 4.

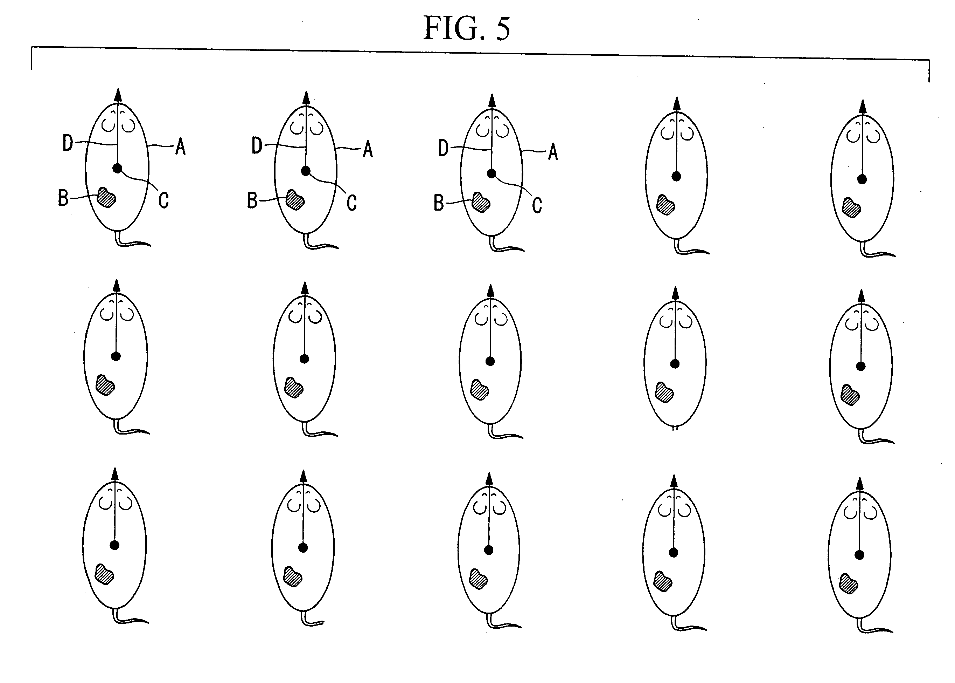

Then, for example, by carrying out image processing to remove the image region outside the outline of the mouse A in each combined image G₃, outlines of the mouse A in all of the combined images G₃ can be arrayed at equal intervals and in the same direction on the display unit 5, as shown in Fig. 5.

With the fluorescence observation apparatus 1 according to this embodiment, configured as described above, combined images G₃ of the same mouse A or different mice A acquired at predetermined time intervals can be regularly arrayed and displayed on the display unit 5. Accordingly, there is an advantage in that, when a change in the shape of an affected site B in the same specimen over time is to be examined, the change can be easily observed without missing any minute changes. Furthermore, comparative examination of the shapes of affected sites B in different specimens can be carried out, and the differences in the affected sites B in the different specimens can be easily discovered.

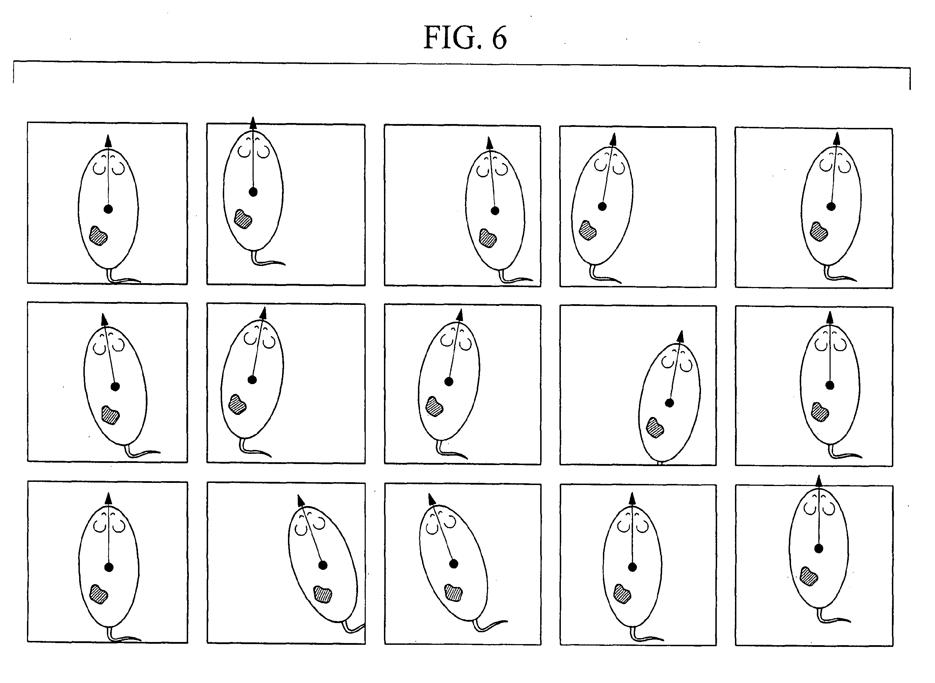

For comparison, Fig. 6 illustrates unprocessed combined images G₃ displayed in an array. In Fig. 6, the positions of the affected sites B vary in the vertical direction on the display screen. Moreover, since some of the combined images G₃ are rotated, it is difficult to quickly and accurately determine whether the position or the shape of the affected site B inside the outlines of the mouse A has changed.

In contrast, since the fluorescence observation apparatus 1 according to this embodiment regularly arrays and displays the outlines of the mouse A in all combined images G₃, as shown in Fig. 5, there is an advantage in that slight changes in the position and shape of the affected site B inside the outlines of the mouse A can be easily detected.

Furthermore, as described above, in this embodiment, the mouse A is secured on the stage 7 each time a combined image G₃ is acquired at a predetermined time interval. When securing the mouse A, the mouse A merely needs to be roughly positioned in the field of view of the image-acquisition unit 18 so that the field includes almost the entire body of the mouse A. In other words, the mouse A does not have to be accurately positioned and secured on the stage 7 since the generated combined images G₃ are moved such that the outlines of the mouse A are displayed in a regular array.

As a result, the examination time can be reduced by simplifying the operation required for securing the mouse A.

In particular, there is an advantage in that, when images of many mice A need to be acquired, for example, to carry out drug discovery screening, many combined images G₃ can be quickly acquired by reducing the time required for changing the mouse A.

In this embodiment, the observation optical system 8 including the excitation light source 11 is stored inside the case 9, and excitation light is emitted from the excitation light source 11 by detecting the closing of the door 19. This is advantageous in that leakage of the excitation light to the outside can be prevented.

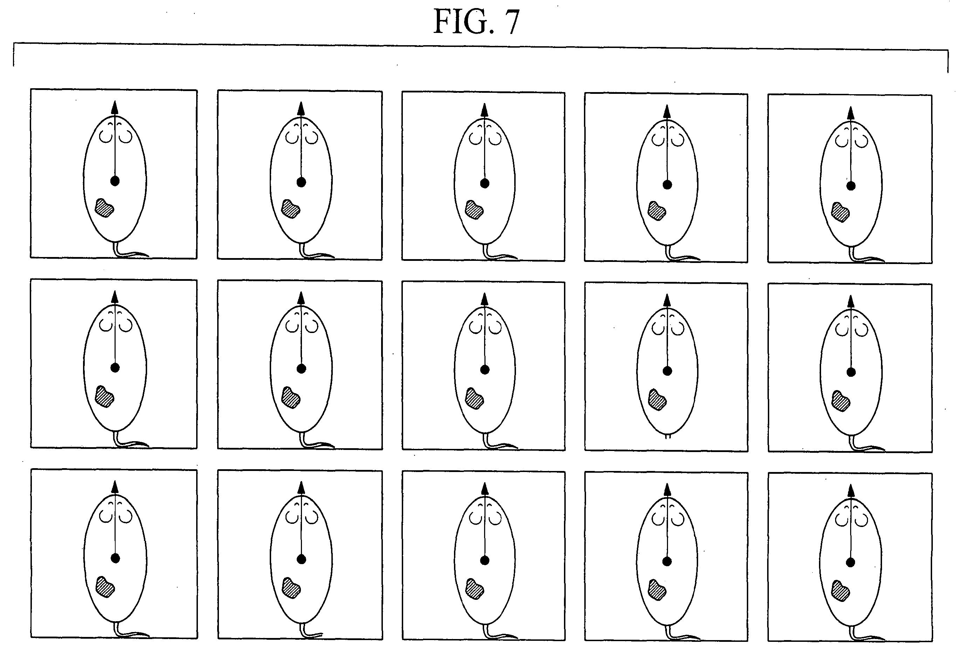

In this embodiment, a combined image G₃ is displayed by removing the image region outside the outline of the mouse A. Instead, however, as shown in Fig. 4, the combined image G₃ may be displayed without removing the image region outside the outline of the mouse A. As shown in Fig. 7, images of outlines of the mouse A which are regularly arrayed may be displayed at the centers inside regularly arrayed frames.

In this embodiment, a mouse A is used as the small laboratory animal as an example. However, the small laboratory animal is not limited to a mouse A; any other small laboratory animal may be used for fluorescence observation.

In this embodiment, fifteen combined images G₃ are arrayed as an example. Instead, however, any number of combined images may be displayed in any number of rows and columns. The combined images G₃ may be displayed in a single row or column.

The control unit 6 may calculate the area, the average intensity, and the maximum intensity of the affected site B on the basis of the acquired combined images G₃ and analyze the affected site B using the calculated values.

In this embodiment, a plurality of combined images G₃ is arrayed and displayed at once. Instead, however, each of the plurality of combined images G₃ may be displayed one by one.

In such a case, each combined image G₃ may be displayed so that the center of gravity C and the orientation D of the mouse A calculated by the control unit 6 match those in the other combined images G₃.

In this way, when the change of the same mouse A over time is examined, the outlines can be substantially fixed so that only the change of the shape and position of the affected site B is displayed. Accordingly, the changes in the affected site B over time can be easily examined.

Moreover, there is an advantage in that, when comparative examination of different mice A is carried out, the differences in the sizes and positions of the affected sites B can be clearly examined, and, in this way, even slight differences in the affected sites B will not be missed.

## Claims

1. A fluorescence observation apparatus comprising:
a display unit configured to display a plurality of combined images arrayed in at least one direction, each of the combined images being generated by combining a bright-field image and a fluorescence image of a small laboratory animal;
an outline-extracting unit configured to extract an outline of the small laboratory animal in the bright-field image included in each combined image; and
an image-position adjusting unit configured to adjust the display positions of the combined images such that the outlines of the small laboratory animal extracted by the outline-extracting unit match each other in a direction orthogonal to the arrayed direction.

2. The fluorescence observation apparatus according to Claim 1, wherein the image-position adjusting unit calculates the centers of gravity of the outlines of the small laboratory animal and adjusts the display positions of the combined images such that the centers of gravity in the combined images match each other in the direction orthogonal to the arrayed direction.

3. The fluorescence observation apparatus according to Claim 1 or 2, wherein the image-position adjusting unit calculates the longitudinal direction and the orientation of the outlines of the small laboratory animal and adjusts the display angles of the combined images such that the longitudinal directions and the orientations of the combined images match each other.

4. A fluorescence observation apparatus comprising:
a display unit configured to display and switch between a plurality of combined images that are each generated by combining a bright-field image and a fluorescence image of a small laboratory animal;
an outline-extracting unit configured to extract an outline of the small laboratory animal in the bright-field image included in each combined image; and
an image-position adjusting unit configured to adjust the display positions of the combined images such that the outlines of the small laboratory animal extracted by the outline-extracting unit match each other.

5. The fluorescence observation apparatus according to Claim 4, wherein the image-position adjusting unit calculates the centers of gravity of the outlines of the small laboratory animal and adjusts the display positions of the combined images such that the centers of gravity in the combined images match each other.

6. The fluorescence observation apparatus according to Claim 4 or 5, wherein the image-position adjusting unit calculates the longitudinal direction and the orientation of the outlines of the small laboratory animal and adjusts the display angles of the combined images such that the longitudinal directions and the orientations of the combined images match each other.

7. The fluorescence observation apparatus according to one of Claims 1 to 6 further comprising:
an observation optical system configured to acquire the bright-field images and the fluorescence images of the small laboratory animal;
an image-combining unit configured to combine a bright-field image and a fluorescence image acquired by fixing the observation optical system with respect to the small laboratory animal; and
an image-storing unit configured to store the combined image acquired by the image-combining unit,
wherein a plurality of combined images stored in the image-storing unit is displayed on the display unit.

8. The fluorescence observation apparatus according to Claim 7 further comprising:
an image analyzing unit configured to analyze the combined images stored in the image-storing unit.

9. The fluorescence observation apparatus according to Claim 7 or 8 further comprising:
a case configured to accommodate the observation optical system and block light,
wherein the case has an openable and closable door and a sensor configured to detect the opening and closing of the door, and
wherein, when the sensor detects that the door has been closed, a bright-field image and a fluorescence image are acquired by the observation optical system.
